# EUROPEAN PATENT APPLICATION

(11) **EP 2 842 429 A1**
(43) Date of publication of application: **04.03.2015**
(21) Application number: 14190375.7
(22) Date of filing: 22.09.2009
(51) Int. Cl.: A23L 1/00, A23G 4/20

(54) **Chewing gum and methods of production thereof**

(30) Priority: 23.09.2008 GB 0817370
(62) Divisional of application: 09785138.0
(71) Applicant: Cadbury UK Limited, Birmingham, West Midlands B30 2LU (GB)
(72) Inventor: Vaman, Shama, Karu, London, Greater London SW6 6BH (GB); Pearson, Sarah, Jayne, Prestwood, Canberra, Australian Capital Territory 2913 (AU); Norton, Clive, Richard, Thomas, Shinfield, Berkshire RG2 9EF (GB)
(74) Representative: Wilson Gunn

(57) **Abstract**

The invention relates to a chewing gum product comprising an extruded body portion, the body portion having a plurality of capillaries disposed therein, one or more capillaries being at least partially filled with a fill material and the body portion and/or the fill material comprising gum. The invention also relates to a process of manufacturing the same.

## Description

### Technical Field of the Invention

The present invention relates to chewing gum and methods of production thereof. In particular, the invention relates to a chewing gum comprising a plurality of capillaries which are at least partially filled with a fill material.

### Background to the Invention

It is desirable to produce chewing gum formed of different components, so as to increase sensory pleasure. A number of chewing gum products exist, which have a flavoured liquid or syrup centre which is released upon chewing. For example, Trident® Splash® chewing gum has a liquid centre filling. US2007003663 discloses a chewing or bubble gum composition which includes a liquid fill composition and a gum region which includes a gum base surrounding the liquid fill. Whilst such products are known to increase sensory pleasure, the period of pleasure is often short lived as the centre is released quickly and/or degraded. It is therefore an object of the present invention to provide a chewing gum which can offer an extended release of a centre fill and/or provide a new and improved sensory experience.

There is also a demand for providing a chewing gum having a reduced sugar content. It is thus a further object of the present invention to provide a chewing gum product which can be produced having a lowered sugar content, which maintains or provides an improved sensory experience.

It is an aim of an embodiment or embodiments of the present invention to overcome one or more of the problems of the prior art. It is also an aim of one of the embodiments of the present invention to provide a filled chewing gum having an extended fill release profile and a method of manufacture thereof It is also a further aim of the present invention to provide a chewing gum which has a reduced sugar profile.

### Summary of the Invention

According to an embodiment of the present invention, there is provided a chewing gum product comprising an extruded body portion, the body portion having a plurality of capillaries disposed therein, one or more capillaries being at least partially filled with a fill material and the body portion and/or the fill material comprising gum.

The present invention therefore provides for a chewing gum product which may have an extended or different release profile of a fill material which has been introduced into the capillaries.

In the context of the present invention, the term "chewing gum" is intended to include bubble gum and gum base which is used in the manufacture of a range of gums.

In one embodiment, only the body portion comprises a gum. In an alternative embodiment, only the fill material comprises gum. In a further embodiment, both the body portion and the fill material comprise gum. In a yet further embodiment, the body portion and the fill material may each comprise different gum components - so that when the product is chewed, the different components are mixed together in the mouth. For example, the body portion may comprise a gum base, whereas the fill material may comprise flavouring and sweetening agents. In a further embodiment, different capillaries may be filled with different gum components, so that when the product is chewed, the different components are mixed together.

In embodiments where the material of the body portion or fill material does not comprise gum, a number of materials may be employed which are commonly used in the production of confectionery - such as candy, gum and chocolate etc. Suitable chocolate includes dark, milk, white and compound chocolate. Suitable candy includes hard candy, chewy candy, gummy candy, jelly candy, toffee, fudge, nougat and the like.

The capillaries may extend along the substantially entire length of the body portion, but may in some embodiment extend no less than 75%, 80%, 90%, 95% or 99% along the length of the body portion (for example, when it is desired to seal the ends of the body portion). If the capillaries extend along the entire length of body portion, suitably the ends of the capillaries are visible at one or more ends of the body portion.

In certain embodiments, one or more of the capillaries may be filled with a liquid material. The capillaries may be filled with a material which is solid at a room temperature and fluid at a temperature greater than room temperature. For example, a molten chocolate may be incorporated into the capillaries and allowed to set when cooled to room temperature. It will be apparent to the skilled addressee that room temperature is commonly regarded as around 20°C. Alternatively, the capillaries may be filled with a material which is deposited as a liquid and which subsequently solidifies. In such embodiments, the solidification may be dependent or independent of heat. It will be apparent that solidification of a liquid filled capillary may be achieved in a number of ways. For example solidification may take place due to one or more of the following:
Cooling - the filling may be molten when deposited which then cools to a solid at room temperature;
Heating - the filling may be liquid when deposited, and the heat of the extruded body portion sets the filling (e.g. pumping egg albumen into a hot hard candy extruded body portion will set the egg on contact);
Drying - the filling may be a solution that dries into a solid (e.g. the moisture from the solution is absorbed into the extruded body portion);
Solvent loss - the filling may be in a solvent, whereby the solvent is absorbed into the extruded body portion, leaving a solid;
Chemical reaction - the filling may be deposited as a liquid but reacts or "goes off" into a solid;
Cross-linking - the filling may form a constituents for a cross-linked material due to mixing and/or heating; and
Time - the filling may simply set with time (e.g. a solution of sugars and gelatin will eventually set over time).

Suitable filling materials for the capillaries include, but are not limited to, aqueous media, fats, chocolate, caramel, cocoa butter, fondant, syrups, peanut butter, jam, jelly, gels, truffle, praline, chewy candy, hard candy or any combination or mixture thereof.

The gum may be formed of a number of gum components commonly used in chewing gum production.

The gum will preferably comprise a gum base which normally comprises an elastomer. Useful synthetic elastomers include, but are not limited to, synthetic elastomers listed in U.S. Food and Drug Administration, CFR, Title 21, Section 172,615, the Masticatory Substances, Synthetic, the contents of which are incorporated herein by reference for all purposes) such as polyisobutylene. e.g. having a gas pressure chromatography (GPC) average molecular weight in the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3:1, polyvinyl acetate (PVA), e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base, polyisoprene, polyethylene, vinyl acetate-vinyl laurate copolymer e.g. having a vinyl laurate content of about 5 to 50% by weight such as 10 to 45% by weight of the copolymer, and combinations hereof.

It is possible to combine a synthetic elastomer having a high molecular weight and a synthetic elastomer having a low molecular weight elastomer in a gum base. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Typically, the gum base comprises at least one elastomer in an amount in the range of 3- 80% by weight of the gum base, preferably in an amount in the range of 4-60% by weight of the gum base, and even more preferred in the range of 5-40% by weight of the gum base, such as in the range of 8-20% by weight of the gum base.

The elastomer may comprise a biodegradable elastomer. A biodegradable elastomer may e.g. be a polyester, e.g. obtained by polymerization of at least one cyclic ester.

The gum base may comprise one or more resins contributing to obtain the desired masticatory properties and acting as plasticizers for the elastomers of the gum base. In the present context, useful resins include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins. Other useful resinous compounds include synthetic resins such as terpene resins derived from alpha-pinene, beta-pinene, and/or d-limonene, natural terpene resins; and any suitable combinations of the foregoing. The choice of resins will vary depending on the specific application, and on the type of elastomer(s) being used.

Usually, the gum base comprises at least one resin in an amount in the range of 10-90% by weight of the gum base, preferably in the range of 20-80% by weight, even more preferred in the range of 30-70% by weight of the gum base, such as in the range of 40- 60% by weight of the gum base.

The resin may comprise a natural resin and/or it may comprise a synthetic resin.

The resin may comprise a biodegradable resin. A biodegradable resin may e.g. be a polyester, e.g. obtained by polymerization of at least one cyclic ester.

In an embodiment of the invention, the gum base is a biodegradable gum base, and preferably a biodegradable gum base comprises at least one polyester polymer. A number of useful biodegradable polymers including biodegradable polyesters are found in WO2004068964, which is incorporated herein by reference.

The gum base may furthermore comprise one or more components selected from the group consisting of an emulsifier, a fat, a wax, and filler.

In a preferred embodiment, the gum base comprises emulsifier in an amount in the range of 1-15% by weight, and preferably in the range 5-10% by weight.

A number of different emulsifiers may be used in the gum base. For example, anionic, cationic, amphoteric or non-ionic emulsifiers can be used. Suitable emulsifiers include lecithins, polyoxyethylene stearate, poiyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters ofinteresterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable emulsifiers are polyoxyethylene stearates, such as for instance polyoxyethylene (8) stearate and polyoxyethylene (40) stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllactylate, sodium laurylsulfate, polyoxyethylated hydrogenated castor oil, blockcopolymers of ethylene oxide and propyleneoxide and polyoxyethylene fatty alcohol ether. The emulsifiers may either be a single compound or a combination of several compounds.

In an embodiment of the invention, the gum base comprises at least one resin in an amount in the range of 10-90% by weight of the gum base, at least one elastomer in an amount in the range of 4-60% by weight of the gum base, and an emulsifier in an amount in the range of 1-15% by weight. Preferably, the gum base comprises at least one resin in an amount in the range of 30-70% by weight of the gum base, at least one elastomer in an amount in the range of 5-40% by weight of the gum base, and an emulsifier in an amount in the range of 5-10% by weight.

The mixture comprises at least one chewing gum ingredient and typically several chewing gum ingredients.

The at least one chewing gum ingredient may be selected from the group consisting of a bulk sweetener, a high intensity sweetener, a flavouring agent, a cooling agent, a warming agent a softeners, an emulsifier, a colouring agent, a binding agent, an acidulant, a filler, and an antioxidant.

Useful cooling agents are mentioned in U.S. Patent No. 6,627,233, the contents of which are incorporated herein by reference for all purposes.

Particular examples of cooling agents include: substituted p-menthanes, substituted p-menthane-carboxamides (e.g., N-ethyl-p- menthane-3-carboxamide (FEMA 3455)), acyclic carboxamides, substituted cyclohexanamides, substituted cyclohexane carboxamides, substituted ureas and sulphonamides, and substituted menthanols (all from Wilkinson Sword); hydroxymethyl and hydroxyethyl derivatives of p-menthane (from Lever Bros.); menthyl succinate; 2- mercapto-cyclo-decanone (from International Flavors and Fragrances); 2-isopropanyl-5-methylcyclohexanol (from Hisamitsu Pharmaceuticals, hereinafter "isopregol"); hydroxycarboxylic acids with 2-6 carbon atoms; menthone glycerol ketals (FEMA 3807, tradename FRESCOLAT(TM) type MGA); 3-1-menthoxypropane-1,2-diol (from Takasago, FEMA 3784, (hereinafter "TCA")); menthyl lactate; (from Haarman & Reimer, FEMA 3748, tradename FRESCOLAT(TM) type ML). Useful warming agents include capsicum and nicotinate esters, such as benzyl nicotinate.

In a preferred embodiment of the invention, the at least one chewing gum ingredient is a bulk sweetener, and preferably a polyol.

A number of useful polyols are available and the polyol may e.g. be selected from the group consisting of dextrose, sucrose, lactose, hydrogenated starch hydrolysates, xylitol, mannitol, sorbitol, mannitol, maltitol, isomaltol, erythritol, lactitol, maltodextrin, and cyclodextrin.

In an especially preferred embodiment of the invention, the polyol is present in amount ranging from 10-80% by weight of the mixture.

The polyol may be present in amount ranging from 30-70% by weight of the mixture, such as e.g. in the range 35-65%, and in the range 40-60%.

For example, the polyol may be present in amount ranging from 20-55% by weight of the mixture, such as e.g. in amount ranging from 30-50% by weight of the mixture.

The mixture may furthermore comprise a high intensity sweetener. The high intensity sweetener may e.g. be selected from the group consisting of sucralose, neotame, aspartame, salts of acesulfame, alitame, saccharin and its salts, cyclamic acid and its salts, glycyrrhizin, dihydrochalcones, thaumatin, monellin, stevioside, and combinations thereof.

The high intensity sweetener may e.g. be present in an amount ranging from 0.01-3% by weight of the mixture.

The chewing gum composition, and e.g. the mixture, may furthermore comprise an active ingredient. Examples of such active ingredients is found e.g. in WO 00/25598, the contents of which are fncorporated herein by reference for all purposes.

Useful active ingredients include drugs, dietary supplements, antiseptic agents, pH- adjusting agents, anti-smoking agents and substances for the care or treatment of the oral cavity and the teeth and compounds capable of releasing urea during chewing.

Examples of active ingredients are phenols (e. g. thymol, p-chlorophenol, cresol, EGCG), hexachlorophene, salicylic anilide compounds, triclosan, halogenes (iodine, iodophores, chloroamine, dichlorocyanuric acid salts), alcohols (3,4 dichlorobenzyl alcohol, benzyl alcohol, phenoxyethanol, phenylethanol), cf. also Martindale, metal salts, complexes and compounds with limited water- solubility, such as aluminum salts, (for instance aluminum potassium sulphate AIK(SO4) 2,12H20) and salts, complexes and compounds of boron, barium, strontium, iron, calcium, zinc, (zinc acetate, zinc chloride, zinc gluconate), copper (copper chloride, copper sulphate), lead, silver, magnesium, sodium, potassium, lithium, molybdenum, vanadium should be included; other compositions for the care of mouth and teeth: for instance; salts, complexes and compounds containing fluorine (such as sodium fluoride, sodiummonofluorophosphate, aminofluorides, stannous fluoride), phosphates, carbonates and selenium, Acceptable bases, such as carbonates, hydrogen carbonates, phosphates, sulphates or oxides of sodium, potassium, ammonium, magnesium or calcium, especially magnesium and calcium. Further active ingredients can be found in J. Dent. Res. Vol. 28 No. 2, pages 160-171, 1949*,* the contents of which are incorporated herein by reference for all purposes.

Active ingredients may comprise the below-mentioned compounds or derivates thereof, but are not limited thereto: Acetylsalicylsyre Buprenorphine, Ibuprofen, Ketoprofen, Morphine, Naproxen, Oxycodon, Piroxicam, Pseudoefedrin, Calciumcarbonat, Nicotine, Difenhydramine, Chlorhexidine, Urea, Aspirin, Aluminum salts, Calcium salts, Ferro salts, Silver salts, Zinc-salts, Caffeine, Ephedrine, Phenylephedrine, Nitroglycerin, Testosterone, Protothenic Acid, Aluminiumaminoacetat, paracetamol, benzocaine, cinnarizine, menthol, carvone, chlorhexidine-di-acetate, cyclizine hydrochloride, miconazole, aspartame, sodium fluoride, saccharin, cetylpyridinium chloride, other quaternary ammoniumcompounds, glibenclamide, acetyl- salicylic acid, sodium hydrogencarbonate, the active components from ginkgo, the active components from propolis, the active components from ginseng, methadone, oil of peppermint, salicylamide, hydrocortisone or astemizole, complexes and compounds containing fluorine (such as sodium fluoride, sodiummono- fluorophosphate, aminofluorides, stannous fluoride), phosphates, carbonates and selenium.

Other useful active ingredients may comprise the below-mentioned compounds or derivates thereof, but are not limited thereto: salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydro- chloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int. , Nov. 85, pages 267-271, Barney H. Hunter and Robert L. Talbert, nitroglycerine, erythrityltetranitrate, strychnine and salts thereof, lidocaine, tetracaine hydrochloride, etorphine hydrochloride, atropine, insulin, enzymes (for instance papain, trypsin, amyloglucosidase. glucoseoxidase, streptokinase, streptodornase, dextranase, alpha amylase), polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin. Examples of active ingredients in the form of dietary supplements are for instance salts and compounds having the nutritive effect of vitamin B2 (riboflavin), B12, Folic acid, niacin, biotin, amino acids, the vitamins A, B, C, D, E and K, minerals in the form of salts, complexes and compounds containing calcium, phosphorus, magnesium, iron, zinc, copper, iodine, manganese, chromium, selenium, molybdenum, potassium, sodium or cobalt.

Dental products include Carbamide, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl PropylenediamineDihydrofluoride, Vitamins include A, B1, B2, B6, B12, Folic acfd, niacin, Pantothensyre, biotin, C, D, E, K. Minerals include Calcium, phosphor, magnesium, iron, Zink, Cupper, Iodine, Manganese, Chromium, Selenium, Molybdenum. Other active ingredients include: QlO, enzymes.

Encapsulation materials to be used for the above-mentioned encapsulation methods may e.g. include proteins, such as gelatine, wheat protein, soya protein, sodium caseinate, caseine, and/or zein; gums such as gum arabic; xanthan gum, locus bean gum; starches such as modified starch, hydrolyzed starches (maltodextrines); alginates; pectin; carregeenan; chitosan; waxes such as bees wax, candelilla wax, and/or carnauba wax; hydrogenated vegetable oils.

Other encapsulation materials which are useful for the above-mentioned encapsulation methods are polymers such as polymers polyvinyl alcohol, low molecular weight polyethylene; polyvinyl esters such as polyvinyl acetate, polyvinyl propionate; graft- copolymers of polyvinyl propionate and polyvinyl acetate, copolymers of vinyl acetate and ethylene, propylene, acrylic and methacrylic acid, crotonic acid, maleic acid and esters of unsaturated acids-thereof.

If desired, the product may further comprise a coating portion to envelop the body portion. The skilled addressee will appreciate that a number of coatings could be employed - for example chocolate, gum, candy and sugar etc.

The coating portion may be a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the mixture for various reasons. In a typical process of providing the mixture with a protective sugar coating the gum is successively treated in suitable coating equipment with aqueous solutions of crystallizable sugar such as sucrose or dextrose, which, depending on the stage of coating reached, may contain other functional ingredients, e.g. fillers, colours, etc. In the present context, the sugar coating may contain further functional or active compounds including flavour compounds, pharmaceutically active compounds and/or polymer degrading substances.

In a typical hard coating process, a syrup containing crystallizable sugar and/or polyol is applied onto the mixture and the water it contains is evaporated off by blowing with warm, dry air. This cycle may be repeated several times, typically 10 to 80 times, in order to reach the swelling required. The term "swelling" refers to the increase in weight of the products, as considered at the end of the coating operation by comparison with the beginning, and in relation to the final weight of the coated chewing gum composition.

Alternatively, the coating may be a soft coating. Such a soft coating is applied using conventional methods and may advantageously consist of a mixture of a sugar or any of the above non-cariogenic, sugar-less sweetening compounds and a starch hydrolysate. The coating may be a film coating. The film coating may be obtained by subjecting the mixture to a film coating process and which therefore comprises one or more film-forming polymeric agents and optionally one or more auxiliary compounds, e.g. plasticizers, pigments and opacifiers. A film coating is a thin polymer-based coating applied to a mixture of any of the above forms. The thickness of such a film coating is usually between 20 and 100 µm. Generally, the film coating is obtained by passing the mixture through a spray zone with atomized droplets of the coating materials in a suitable aqueous or organic solvent vehicle, after which the material adhering to the mixture is dried before the next portion of coating is received. This cycle is repeated until the coating is complete. In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the chewing gum composition comprise a plasticizing agent having the capacity to alter the physical properties of a polymer to render it more useful in performing its function as a film forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity.

In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer (s) and plasticizing agent (s) for the film coating of the mixture is made with due consideration for achieving the best possible barrier properties of the coating in respect of dissolution and diffusion across the film of moisture and gasses.

The film coating of the mixture may also contain one or more colorants or opacifiers. In addition to providing a desired colour hue, such agents may contribute to protecting the compressed gum base against pre-chewing reactions, in particular by forming a barrier against moisture and gasses. Suitable colorants/opacifiers include organic dyes and their lakes, inorganic colouring agents, e.g. titanium oxide and natural colours such as e.g. beta-carotene.

Additionally, film coatings may contain one or several auxiliary substances such as flavours and waxes or saccharide compounds such as polydextrose, dextrins including maltodextrin, lactose, modified starch, a protein such as gelatine or zein, a vegetable gum and any combination thereof.

The coating, in general, typically comprises one or more layers. For example the number of layers of the coating may be in the range of 1-100 layers, such as 3-75 layers, 10-60 layers, and 20-40 layers.

The coating may comprise for example a wax layer. In an embodiment of the invention, the outermost layer of the coating is a wax layer.

The body portion may be connected to one or more further chewing gum portions. In some embodiments, the body portion is sandwiched between confectionery/chewing gum materials or may be connected or laminated to one or more confectionery/chewing gum layers. The further chewing gum portion or portions may or may not contain inclusions, liquid-filled beads etc.

In some embodiments, the capillaries are distributed substantially uniformly throughout the body portion, and may be spaced evenly apart from adjacent capillaries. In other embodiments, the capillaries may be distributed in predefined configurations within the body portion, such as around the periphery of the body portion, or in groups at one or more locations within the body. In some embodiments the body portion has a circular, elliptical, regular polygonal or semicircular cross-section. The body portion may be shaped in the form of a cylinder, a rope, a filament, a strip, a ribbon or the like, or may be shaped in the form of a standard chewing gum product such a chewing gum slab, pellet, ball, stick or ribbon, for example. The body portion may be irregular or regular in shape. Furthermore, the body portion may be formed in potentially any shape, for example in the shape of an object, cartoon character or an animal to name a few. The shape of the body portion may be generally rounded or polygonal in cross-section.

It is preferred that the capillaries are generally uniform throughout the body portion. The width or diameter of the capillaries may be substantially uniform in the body portion. The distance between adjacent capillaries may remain substantially the same in the body portion. Preferably, two or more capillaries extend substantially parallel to one another in the body portion.

Such an arrangement will allow, if desired, for different quantities of different fill materials to be incorporated into different capillaries. Furthermore, the capillaries may have different cross-sectional profiles. For example, the confectionery product may have capillaries having a cross-sectional shapes including stars and triangles, or different shapes of animals etc.

The body portion may incorporate a central cavity. If such a central cavity is provided, it may have a width or diameter which is larger than the capillaries.

In an embodiment, the capillaries in the body portion result in a voidage in the range of 1 - 99% of the extrudate, or 5 - 99% of the extrudate. The voidage may be in the range of 10 - 60%, 20 - 50%, 30 - 45%, or 35 - 40%. The voidage may also be in intermediate points in these ranges, for example, 5 - 40%, 5-45%, 5 - 50%, 5 - 60%, 10 - 40%, 10 - 45%, 10 - 50%, 10 - 99%, 20 - 60%, 20 - 45%, 20 - 40%, 20 - 60%, 20 - 99%, 30 - 40 %, 30 - 50%, 30 - 60 % or 30 - 99%. The voidage may be over 5%, 10%, 15%, 20%, 25%, 30%, 35%, 40%, 45%, 50%, 55%, 60%, 65%, 70%, 75%, 80%, 85%, 90% or 95%.

The incorporation of capillaries of a small cross-sectional width or diameter enables the capillaries to entrain contrasting or complementary chewing gum materials into the body portion whilst avoiding the need to incorporate large centre-fill areas which may be prone to leakage through, or out of, the chewing gum product. The use of a plurality of capillaries also enables two or more materials to be incorporated into the chewing gum product to give multiple textures, tastes, colours and/or mouth-feel sensations, throughout the whole product.

In some embodiments, the capillaries have a diameter or width of no more than, 2mm, 1mm, 0.5mm, 0.25mm or less. It is possible to have capillaries having a diameter or width of no more than 100µm , 50µm or 10µm.

The material of the body portion will preferably be liquid during extrusion. It should be understood that the term "liquid" is intended to mean that the material is capable or has a readiness to flow, including pastes. Furthermore, this term is intended to include (but not limited to) those materials which may be "molten" during extrusion and the skilled addressee will understand that the term "molten" means that the material has been reduced to a liquid form or a form which exhibits the properties of a liquid. The body portion may be at least partially or substantially solid, so that it can no longer be considered to flow in a liquid form.

In another embodiment of the present invention, there is provided a chewing gum product comprising a first extruded portion and a second extruded portion, wherein each portion has a plurality of capillaries disposed therein, and the capillaries of the first and second portions are:
a) discontinuous; and/or
b) continuous and oriented in more than one direction.

The capillaries of each portion may be formed substantially parallel to one another. In one embodiment, the first and second portions are in a stacked configuration, such that the capillaries of the first and second portions are substantially parallel to each other. In an alternative embodiment, the first and second portions are in a folded configuration. In yet another alternative embodiment, the first and second portions are discontinuous and the capillaries are oriented in a random configuration in relation to one another. In some embodiments, the capillaries of the first and/or second portions have a diameter or width of no more than, 3mm, 2mm, 1mm, 0.5mm, 0.25mm or less. It is possible to have capillaries having a diameter or width as low as 100µm , 50µm or 10µm.

The capillaries of the first and/or second portions may have different widths or diameters.

There may be further portions in addition to the first and second portions, which may or may not comprise capillaries. In one embodiment, the chewing gum product comprises the first portion separated from the second portion by one or more further portions that may or may not contain capillaries.

The first and second portions may be as described hereinabove for the body portion. The first and second portions may comprise the same material or different materials. For example, the first portion may be chocolate and the second portion gum. The capillaries in each of the first and second portions may be filled with the same or different materials. One or more capillaries in the first and/or second portions may be filled with different material(s) to other capillaries in the first and/or second portion.

According to a further embodiment of the invention, there is provided a chewing gum product comprising an extruded body portion having a plurality of capillaries disposed therein, wherein each capillary is separated from each adjacent capillary by a wall formed from the extruded body portion and wherein the wall between each capillary has a thickness of no more than the width or diameter of the capillaries.

According to a further embodiment, there is provided a process for manufacturing a chewing gum product comprising a body portion, having a plurality of capillaries disposed therein, the process comprising the step of:
a) extruding an extrudable chewing gum material with a plurality of capillaries disposed therein; and
b) at least partially filling one or more capillaries with a fill material, and wherein the body portion and/or the fill material comprises gum.

In some embodiments, the method may include an extra step selected from:
c) cutting the extrudate into two or more pieces having a plurality of capillaries disposed therein and forming a chewing gum product incorporating the pieces; and/or
d) folding the extrudate and forming a chewing gum product incorporating the folded extrudate.

According to a further embodiment, there is provided a process for manufacturing a chewing gum product comprising a body portion, having a plurality of capillaries disposed therein, the process comprising the steps of:
a) extruding an extrudable chewing gum material with a plurality of capillaries disposed therein; and
b) cutting the extrudate into two or more pieces having a plurality of capillaries disposed therein and forming a chewing gum product incorporating the pieces; or
c) folding the extrudate and forming a chewing gum product incorporating the folded extrudate.

Any of the above processes may further comprise the step of depositing a fill material in at least part of one or more of the capillaries. The deposition of the filling may be during the step of extrusion - but could also take place after extrusion. In an embodiment, the filling comprises a fluid. The fluid may comprises a liquid, or a material which is liquid at a temperature greater than room temperature. The fluid may solidify after deposition if desired.

Any of the processes may further comprise the step of quench cooling the extrudate after extrusion. The quench cooling may utilise a fluid, such as air, an oil or liquid nitrogen - but other methods of quench cooling will also be apparent to the skilled addressee.

Any of the processes may further comprise the step of, after extrusion, stretching the extrudate. Stretching the extrudate may be undertaken by a number of means, for example passing the extrudate over, or through conveyor belts or rollers operating at different speeds, so as to stretch the extrudate. By employing this additional step, extrusions having capillaries of a larger diameter can be undertaken, which can be reduced in diameter gradually over time so as to produce an extrudate with smaller capillaries which would have been more difficult to produce. Commonly, capillaries having a bore size of 2mm or more will be produced during extrusion and these capillaries will be reduced significantly by stretching the extrudate. In some embodiments the capillaries are reduced to no more than 1mm, 0.5mm, 0.25mm, 100µm, 50µm, 25µm or 10 µm.

Any of the processes may further comprise the step of enveloping the chewing gum product in a coating. Such a coating will be apparent to the skilled addressee and discussed previously.

The processes may be used for producing a chewing gum material as herein above described.

A further embodiment of the present invention provides for apparatus which is adapted for producing a chewing gum product according to the processes as herein above described. WO2005056272 discloses an apparatus for producing an extrudated product including a plurality of capillary channels. WO2008044122 discloses a related apparatus, which additionally includes means for quench cooling an extrudate as it exits the die. Both of these apparatus may be employed/adapted for use in producing the chewing gum in accordance with the present invention.

### Detailed Description of the Invention

Specific embodiments of the present invention will now be described, by way of example only, with reference to the accompanying drawings, in which:
Figure 1 is a schematic diagram illustrating an overview of the apparatus used in the experiments described in the examples, in accordance with the present invention;
Figure 2 is a schematic diagram illustrating the apparatus which can be used in conjunction with the apparatus shown in Figure 1, so as to provide a liquid filled capillaries;
Figure 3 is a photograph of the extrusion die used to form capillaries in the extruded material the examples;
Figure 4 is a plan view of the extrusion die which incorporates the extrusion die shown in Figure 3 in the apparatus as illustrated in Figures 1 and 2;
Figure 5 shows a photograph of the external part of the extrusion apparatus as illustrated in Figures 1 and 2, showing the air knives used to cool the extrudate when it exist the die;
Figure 6 shows an embodiment of the present invention which comprises a gum with an air fill;
Figure 7 shows an embodiment of the present invention which comprises a gum with a liquid fill;
Figure 8 shows an embodiment of the present invention which comprises a gum with a solid fill;
Figure 9A shows a perspective view of an extrudate formed in accordance with the present invention, where the extrudate has been folded;
Figure 9B shows a cross-sectional view of the extrudate as shown in Figure 9A, viewed from the line denoted "X";
Figure 10 shows a perspective view of an extrudate formed in accordance with the present invention, where a number of extrudated layers have been stacked upon one another;
Figure 11 shows a cross-sectional view of a chewing gum product in accordance with the present invention, where the capillaries are arranged around the periphery of the product and surrounding a large centre filled cavity; and
Figure 12 is a photograph showing a cross-section of a product made in accordance with the present invention, having an extruded gum body portion with a central cavity and a plurality of capillaries located around the periphery.

Experiments were conducted in order to produce a chewing gum incorporating capillaries using food grade equipment in a food grade environment.

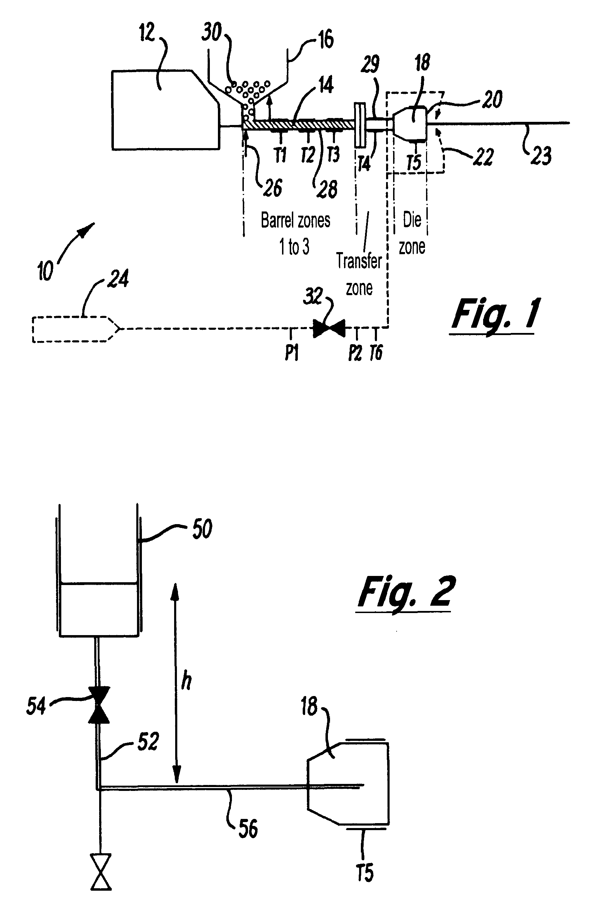

A schematic diagram showing the general layout of the extrusion line is shown in Figure 1 and a schematic drawing of the capillary die is shown in Figure 2.

With reference to Figure 1, there is shown a schematic diagram of the extrusion apparatus 10 used in the experiments. The apparatus briefly comprises an electric motor 12 which is rotatably coupled to an extrusion screw 14. The screw 14 is fed at one end by a hopper 16 and the opposing end is coupled to an extrusion die 18 having an extrudate outlet 20. Quench jets 22 are directed towards the die outlet 20 so as to cool the extruded material 23 which is produced and these jets are fed with compressed air 24. If desired, the area of the apparatus where the hopper 16 is coupled to the screw 14 can be cooled by means of a cooling feed 26. Surrounding the screw 14 is a barrel 28 which is formed having three barrel temperature zones denoted T1 to T3 - the temperatures of each zone being capable of being controlled. The barrel 28 is connected to the die 18 by means of a feed conduit 29 which also has a temperature zone T4 which can be controlled.

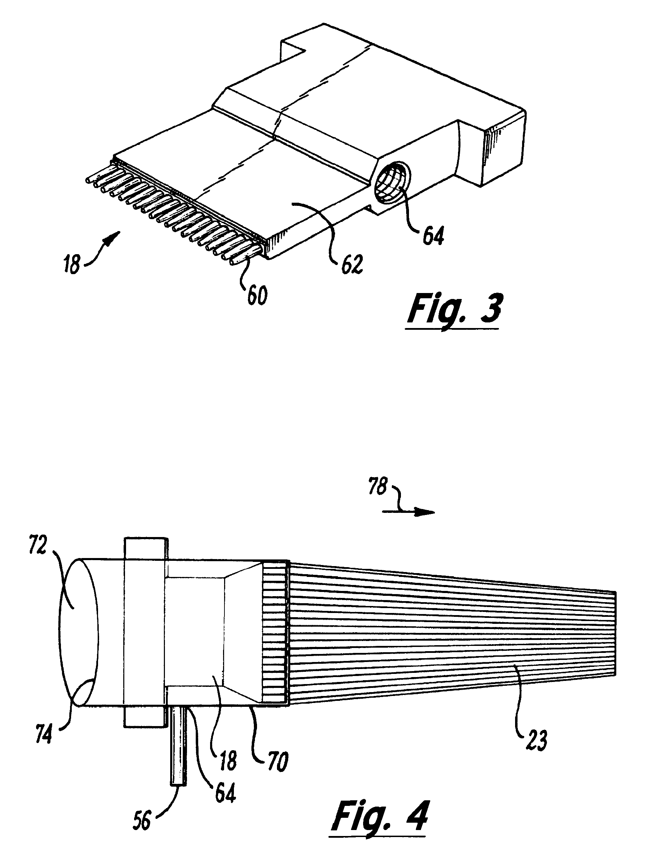

In use, the hopper 16 is filled with material 30 (such as gum) which can be heated so as to render it (or maintain it as) a flowable material. Before the material passes into the screw 14, it can be cooled by means of the cool feed 26, so as to ensure that the material is at the correct temperature for entering the screw extruder. As the screw is rotated, the liquid material is drawn along the screw 14, inside the barrel 28 and the temperature of the zones T1-T3 adjusted accordingly. The material then passes through the feed conduit 29 and the temperature adjusted again (if required) by temperature control T4 before entering the die 18. The die 18 (shown in Figure 3) has a number of needles (not shown) located within an entrainment body so that the material passes over and around the needles. At the same time that the material is being extruded, compressed air 24 is forced through the needles so that the extrudate contains a number of capillaries. The extrudate 23 is cooled by means of the quench jets 22 as it is released from the die 18. A valve 32 controls the flow of compressed air to the apparatus and pressure devices P1 and P2 control the pressure of the compressed air 24 before and after the valve. The compressed air line also has a temperature control T6 so as to control the temperature of the air before entering the die.

With reference to Figure 2, there is shown an adaptation of the apparatus shown in Figure 1. Rather than compressed air 24 being forced through needles, the needles are connected to a reservoir 50 containing cocoa butter. The reservoir 50 is heated so that the cocoa butter is maintained at the correct temperature so as to maintain it in a liquid state. The reservoir 50 is connected to a conduit 52 having an isolation valve 54 for controlling the flow of liquid. The conduit 52 is encased in a trace heating tube 56 which maintains the temperature of the conduit so that the liquid remains in a liquid state during its movement within the conduit. The conduit 52 is coupled to the inlet to the die 18 having number of needles, so that when the material is being extruded, the capillaries formed around and the needles can be simultaneously filled with cocoa butter. Of course, the capillaries could be filled with other types of liquid material if desired.

Figure 3 shows the die 18 in more detail. In particular, this figure shows that the metallic die 18 has, at one end, a plurality of needles 60 which are joined to a cavity 62 which is in fluid communication with an inlet channel 64 for pumping a fluid material into the capillaries of the extrusion.

With reference to Figure 4, there is shown the die 18 in place in an entrainment body 70. Molten material 72 enters an opening 74 of the entrainment body 70 and the material is forced over and around the needles 60 of the die 18. At the same time, either air or liquid cocoa butter enters the die inlet by means of a fluid feed conduit 56. When operational, the molten material is extruded through the entrainment body 70 over the needles 60 of the die 18. Either air or cocoa butter is then pumped through the needles at the same time so as to produce an extrudate 23 (in direction 78) which either has capillaries with no filling or capillaries filled with cocoa butter.

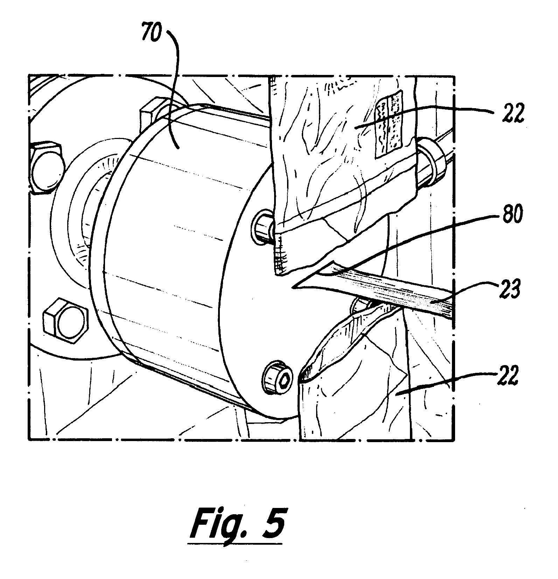

Figure 5 shows the entrainment body 70 having an opening 80, through which the extrudate is formed. This figure also shows two quench jets 22 located above and below the aperture so as to cool down the extrudate after is has been produced.

In use, the flow of molten material over the tips of the entrainment nozzles (hypodermic needles) caused a small area of low pressure to form at each needle tip. Each nozzle was connected together via internal channelling within the entrainment body. These, in turn, were connected outside the extrusion die to either air at room temperature and pressure or to a molten cocoa butter reservoir, with a hydraulic head of h in Figure 2. The pipework connecting the die to the cocoa butter reservoir and the cocoa butter reservoir was externally heated to maintain the cocoa butter in the liquid phase. A set of isolation valves were used to switch between either using an air feed to the entrainment body or a molten cocoa butter feed. This is shown schematically in Figure 2.

The quench jets were used for the generation of the high-voidage material. Differential scanning calorimetry (DSC) was used to examine the thermal behaviour of the materials, such that information relating to the phase transition temperatures could be obtained.

The food-grade setup extruded chewing gum with air, liquid and solid centres. The filled extrudates were made in a food grade environment and were consumed to investigate their edible properties.

Chewing gum was produced from uncoated Peppermint-Spearmint Higher flavour chewing gum pellets. Liquid fillings used in these experiments included: monopropylene glycol (Propane-1,2-diol, BP, EP, USP, Fisher scientific®-selected for low viscosity, zero moisture, low flavour, and BP, EP & USP grade for oral use), Golden Syrup (partially inverted refiners syrup - Tate & Lyle®-selected for higher viscosity, food grade, shelf stability, and sweet flavour), Red Food Colouring (SuperCook®, UK), Blue Food Colouring (SuperCook®, UK). Lastly, a solid filling of cocoa butter obtained internally was also used in these experiments and this was selected because it is solid at room temperature and has low hot viscosity.

A Davis-Standard HPE-075 ¾" 24:1 single-screw extruder was used in these experiments. The extruder also included air-knives and a header tank. The screw was a simple conveying-compression-pumping all forward element design, with no mixing or reversing sections. The motor was 3KW, geared to produce 0-100rpm screw rotation. The feed throat was jacketed and supplied with flowing ambient water to prevent heat transfer from the barrel causing feed problems with sticky feedstuff. The barrel had three heating zones, each with a 1KW heater and forced ambient air cooler. The standard extruder has a Eurotherm 3216 controller per barrel zone and one spare for the die (die controller connected to thermocouple input and standard 16A 240v socket for up to 1KW heater output).

At point of purchase, two additional die controllers, thermocouple inputs and heater outputs were specified to enable integrated control of the header tank containing filling material and the pipework connecting that header tank to the die. The die was an assembly of parts comprising a body with main die orifice of long thin rectangular shape, through which 19 interconnected nozzles (similar in size to hypodermic needles) also exited. The main body was heated and the nozzles led to an external fitting that could be opened to ambient air or could be connected to the heated, pressurized header tank. A bobbin shaped flange was constructed to mount the die assembly onto the extruder end flange.

The die was heated with 4x 100W ¼" cartridge heaters, and monitored by a K-type thermocouple probe. Initially these were controlled by a Eurotherm 3216 in a bespoke enclosure until the control and power wiring was transferred to a Eurotherm integrated into the extruder. The die assembly was earthed into the power outlet from the extruder.

The header-tank and the pipework connecting the header tank to the die were heated with two 100W ribbon heaters initially controlled from a single analogue controller in a bespoke enclosure, and monitored by a single bare K-type thermocouple. These were later separated to two Eurotherm 3216s integrated into the extruder with two thermocouples and two power supplies. The header tank was earthed to the power outlet, whilst the pipework was plastic and did not need to be earthed.

Compressed air, BOC®, UK was regulated with series 8000 gas regulator and pressures used were 0-10bar. The main use for the compressed air was to supply the air-knives.

Food Safe High-Tech Grease, and Food Safe Penetrating Oil from Solent Lubricants, Leicester, UK was used.

The capillary die was connected on the extruder endplate. Two opposed air knives were used to rapidly quench the extrudate emerging from the extrusion die, were placed above and below the die exit; these jets were connected via a valve to a compressed air line at 10 bar pressure. A schematic diagram showing the general layout of the extrusion line is shown in Figure 1.

In use, the flow of molten material over the tips of the entrainment nozzles (hypodermic needles) caused a small area of low pressure to form at each needle tip. Each nozzle was connected together via internal channelling within the entrainment body. This, in turn, was connected outside the extrusion die to either air at room temperature and pressure or to a header tank containing a liquid that was at ambient or elevated temperature and pressure, with a hydraulic head of h. The header tank and the pipework connecting to the die were externally heated. A set of isolation valves were used to switch between either using an air feed to the entrainment body or a molten cocoa butter feed. This is shown schematically in Figure 2.

The quench jets were used for the generation of the high-voidage material. It had been found during previous research that if the emerging extrudate was quenched very rapidly and subjected to a high drawing force, a higher voidage cross section could be obtained. Adjustment of the polymer and process conditions yielded voidages up to, and possibly in excess of, 60%.

Screw speeds of 15-100rpm were used in the experiments. Differences in product were minimal (except rate of production). Continuous, complete, transparent films with well formed capillaries could be produced optimisation of the protocol. The films could be filled and/or drawn without leaking. Product morphology was found to change with drawing speed and rate of cooling inline. Fast drawing with no cooling could thin the films to 1mm wide with microscopic width and capillaries. Drawing with heavy cooling enlarged the voidage in the films.

Uncoated gum pellets were reduced in size to approximately 3mm to aid feeding into the extruder. This was done with freezing and a domestic food processor. Barrel and die temperatures of 58°C resulted in the most contiguous product. This product had sufficient integrity to be filled with few leaks. It is likely that using gum base, in particular molten gum base, rather than whole gum would produce films with even greater integrity.

Monopropylene glycol filling was achieved at ambient temperature and pressure, with approximately 5cm liquid depth in the header tank which was in turn approximately 10cm higher than the die. Colour was added directly into the header tank as and when required.

Golden Syrup filling was achieved by heating the header tank and pipework to 78°C to fill hard candy, and 58°C to fill gum. Pressurisation of the header tank was required at the lower temperature to generate syrup flow. Again, colour was added directly into the header tank as and when required.

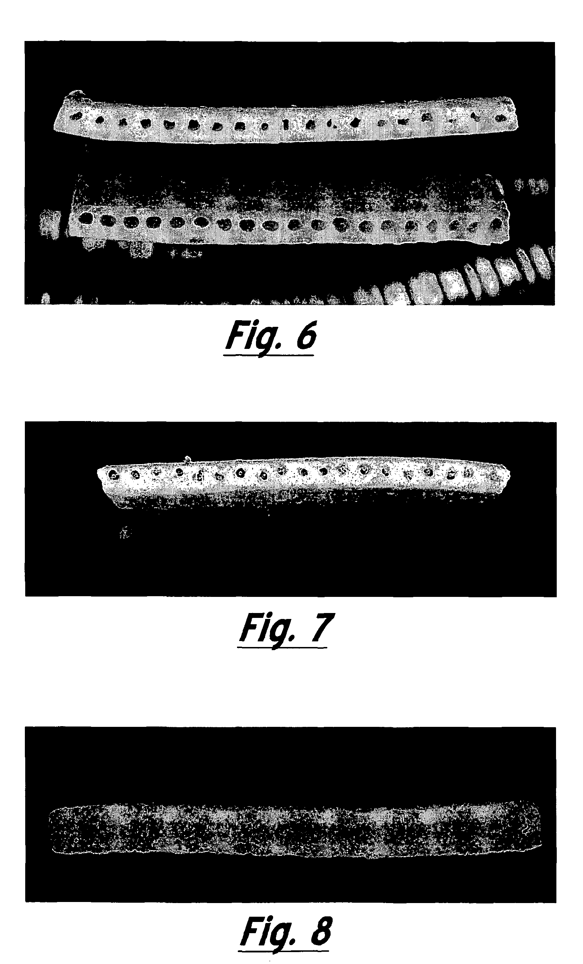

Figures 6-8 shows photographs of extrusions formed in the third phase of experiments. Figure 6 shows a gum with an air fill. Figure 7 shows a gum with a liquid fill. Figure 8 shows a gum with a solid fill.

It has also been shown that air, liquid and solid centres can be incorporated into capillary extrusions, providing the solid centre can be liquefied and is flowable.

The chewing gum extrudates of the present invention could be configured in a number of ways. For example, Figure s 9A and 9B show an extrudate 100 having centre filled capillaries 102, where the extrudate is folded back on itself several times. Such a configuration would enable an extended release of centre fill during chewing. A chewing gum could be formed having a chewy centre having liquid filled capillaries - where the chewy centre was a folded several times so as to enable the liquid fill to be released over an extended period.

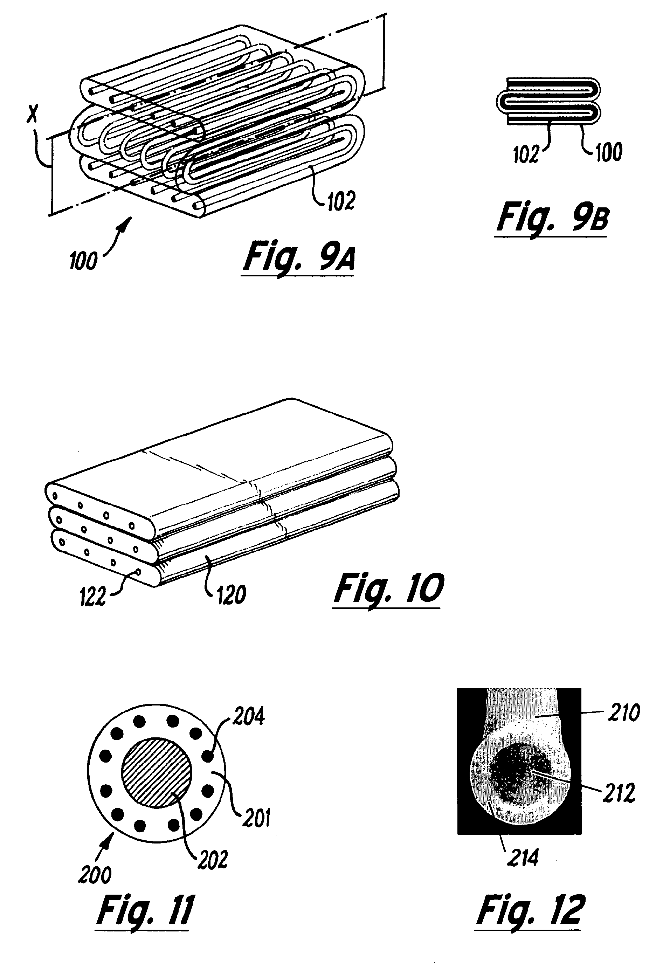

Fig 10, shows multiple layers of extrudate 120 being stacked on top of one another and each stack having a plurality of capillaries 122 with a centre filling.

Figure 11 shows a cylindrical chewing gum product 200 having an extruded body 201 with a circular cross-section. In a central portion of the product, there is provided a liquid centre-fill 202 in the form of a liquid mint fondant. A number of uniformly spaced capillaries 204 extend around the periphery of the product and surround the liquid centre fill 202. The capillaries are filled with a high intensity mint flavoured syrup. After extrusion, the cylindrical product can be nipped and cut along its length so as to form sealed gum pillows having the fondant centre-fill and additional capillaries dispersed in the gum around the centre-fill. Such a product can then be panned with a shell using prior art methods.

Lastly in Figure 12, a photograph shows a cross-section of a chewing gum product which has a similar shape and configuration as shown in Figure 11, the product being formed from an extruded gum body portion 210, with a round central cavity 212 and a plurality of capillaries 214 located around the periphery. The capillaries and cavity can be filled with contrasting materials during or after extrusion.

The foregoing embodiments are not intended to limit the scope of protection afforded by the claims, but rather to describe examples as to how the invention may be put into practice.

### Annex:

Item 1. A chewing gum product comprising an extruded body portion, the body portion having a plurality of capillaries disposed therein, one or more capillaries being at least partially filled with a fill material and the body portion and/or the fill material comprising gum.
Item 2. A chewing gum of item 1, wherein only the body portion comprises gum. Item 3. A chewing gum product of either item 1 or 2, wherein the capillaries are filled with a fluid material.
Item 4. A chewing gum product of item 3, wherein the fluid comprises a liquid. Item 5. A chewing gum product of item 3, wherein the capillaries are filled with a liquid material which solidifies.
Item 6. A chewing gum of item 1, wherein only the fill material comprises gum. Item 7. A chewing gum of item 6, wherein different gum components are located in different capillaries.
Item 8. A chewing gum of item 1, wherein the body portion and the fill material both comprise gum.
Item 9. A chewing gum of item 1, wherein the body portion and the fill material each comprise different gum components.
Item 10. A chewing gum product of any preceding item, wherein the product further comprises a coating portion to envelop the extruded body portion.
Item 11. A chewing gum product of any preceding item, wherein the capillaries in the extruded body portion result in a voidage in the range of 5 - 99%.
Item 12. A chewing gum product of any preceding item, wherein the capillaries have an average width or diameter of no more than 3mm.
Item 13. A chewing gum product of any preceding item wherein the capillaries have an average diameter or width of no more than 2mm.
Item 14. A chewing gum product of any preceding item, wherein the width or diameter of the capillaries is substantially uniform in the body portion.
Item 15. A chewing gum product of any preceding item, wherein the distance between adjacent capillaries remains substantially the same in the body portion. Item 16. A chewing gum product of any preceding item, wherein two or more capillaries extend substantially parallel to one another in the body portion.
Item 17. A chewing gum product of any preceding item where the body portion comprises a first extruded portion and a second extruded portion, wherein each portion has a plurality of capillaries disposed therein, and the capillaries of the first and second portions are:
   a) discontinuous; and/or
   b) continuous and oriented in more than one direction.
Item 18. A chewing gum product of item 17, wherein the capillaries of each portion are formed substantially parallel to one another.
Item 19. A chewing gum product of either item 17 or 18, wherein the first and second portions are in a stacked configuration, such that the capillaries of the first and second portions are substantially parallel to each other.
Item 20. A chewing gum product of any of items 17 to 19, wherein the first and second portions are in a folded configuration.
Item 21. A chewing gum product of either item 17 or 20, wherein the first and second portions are discontinuous and the capillaries are oriented in a random configuration in relation to one another.
Item 22. A process for manufacturing a chewing gum product comprising an extruded body portion having a plurality of capillaries disposed therein, the process comprising the step of:
   a) extruding an extrudable chewing gum material with a plurality of capillaries disposed therein,; and
   b) at least partially filling one or more capillaries with a fill material, wherein the body portion and/or the fill material comprises gum.
Item 23. A process of item 22, further comprising a step selected from:
   c) cutting the extrudate into two or more pieces having a plurality of capillaries disposed therein and forming a chewing gum product incorporating the pieces; or
   d) folding the extrudate and forming a chewing gum product incorporating the folded extrudate.
Item 24. A process of either item 22 or 23, wherein the fill material is deposited during the step of extrusion.
Item 25. A process of any one of items 22 to 24, wherein the fill material comprises a fluid.
Item 26. A process of item 25, wherein the liquid solidifies after deposition.
Item 27. A process of any one of items 22 to 26, wherein the process further comprises the step of quench cooling the extrudate after extrusion.
Item 28. A process of item 27, wherein the quench cooling uses a fluid.
Item 29. A process of any one of items 22 to 28, wherein the process further comprises the step of, after extrusion, stretching the extrudate.
Item 30. A process of any one of items 22 to 29, wherein the process further comprises the step of enveloping the chewing gum product in a coating.
Item 31. A process of any one of items 22 to 30, wherein the process is for producing a chewing gum material of any one of items 1 to 21.
Item 32. An apparatus adapted for producing a chewing gum product according to the process of any one of items 22 to 30.
Item 33. An apparatus adapted for producing a chewing gum product according to the process of any one of items 22 to 32.
Item 34. A chewing gum product substantially as described herein and with reference to the accompanying drawings.
Item 35. A process for producing a chewing gum product substantially as described herein and with reference to the accompanying drawings.

## Claims

1. A chewing gum product comprising an extruded body portion, the body portion having a plurality of capillaries disposed therein, wherein the capillaries in the extruded body portion result in a voidage in the range of 10-60% of the extrudate and wherein the capillaries have an average width or diameter of no more than 3 mm, one or more capillaries being at least partially filled with a fill material, and the body portion and/or the fill material comprising gum, the body portion and the fill material each comprising different gum components.

2. A chewing gum product as claimed in claim 1, wherein the capillaries are filled with a fluid material.

3. A chewing gum product as claimed in claim 2, wherein the fluid comprises a liquid, which may optionally be a liquid material which solidifies.

4. A chewing gum product as claimed in any preceding claim, wherein the product further comprises a coating portion to envelop the extruded body portion.

5. A chewing gum product as claimed in any preceding claim, wherein the capillaries have an average diameter or width of no more than 2 mm.

6. A chewing gum product as claimed in any preceding claim, wherein the width or diameter of the capillaries is substantially uniform in the body portion; and/or wherein the distance between adjacent capillaries remains substantially the same in the body portion; and/or wherein two or more capillaries extend substantially parallel to one another in the body portion.

7. A chewing gum product as claimed in any preceding claim where the body portion comprises a first extruded portion and a second extruded portion, wherein each portion has a plurality of capillaries disposed therein, and the capillaries of the first and second portions are:
a) discontinuous; and/or
b) continuous and oriented in more than one direction.

8. A chewing gum product as claimed in claim 7, wherein the capillaries of each portion are optionally formed substantially parallel to one another; and/or wherein the first and second portions are in a stacked configuration, such that the capillaries of the first and second portions are substantially parallel to each other; and/or wherein the first and second portions are in a folded configuration; or wherein the first and second portions are discontinuous and the capillaries are oriented in a random configuration in relation to one another.

9. A process for manufacturing a chewing gum product comprising an extruded body portion having a plurality of capillaries disposed therein, the process comprising the steps of:
a) extruding an extrudable chewing gum material with a plurality of capillaries disposed therein, wherein the capillaries in the extruded body portion result in a voidage in the range of 10-60% of the extrudate and wherein the capillaries have an average width or diameter of no more than 3mm; and
b) at least partially filling one or more capillaries with a fill material, the body portion and the fill material each comprising different gum components.

10. A process as claimed in claim 9, further comprising a step selected from:
c) cutting the extrudate into two or more pieces having a plurality of capillaries disposed therein and forming a chewing gum product incorporating the pieces; or
d) folding the extrudate and forming a chewing gum product incorporating the folded extrudate.

11. A process as claimed in either claim 9 or 10, wherein the fill material is deposited during the step of extrusion.

12. A process as claimed in any one of claims 9 to 11, wherein the fill material comprises a fluid, which may optionally be a liquid which solidifies after deposition.

13. A process as claimed in any one of claims 9 to 12, wherein the process further comprises the step of quench cooling the extrudate after extrusion, wherein the quench cooling optionally uses a fluid.

14. A process as claimed in any one of claims 9 to 13, wherein the process further comprises the step of, after extrusion, stretching the extrudate.

15. A process as claimed in any one of claims 9 to 14, wherein the process further comprises the step of enveloping the chewing gum product in a coating.
